# EUROPEAN PATENT SPECIFICATION

(11) **EP 2 892 067 B1**
(45) Date of publication and mention of the grant of the patent: **21.09.2016**
(21) Application number: 15150011.3
(22) Date of filing: 02.01.2015
(51) Int. Cl.: H01G 11/84, H01G 11/12, H01G 11/52, H01G 11/72

(54) **Method for manufacturing electricity storage device**
Verfahren zur Herstellung einer Elektrizitätsspeichervorrichtung
Procédé de fabrication d'un dispositif de stockage d'électricité

(30) Priority: 06.01.2014 JP 2014000082
(43) Date of publication of application: 08.07.2015
(73) Proprietor: JTEKT Corporation, Osaka-shi Osaka 542-8502 (JP)
(72) Inventor: Sugiyama, Kazuhisa, Osaka-shi, Osaka 542-8502 (JP)
(74) Representative: TBK

(56) References cited:
- JP-A- 2000 353 643
- JP-A- 2008 258 222
- US-A1- 2003 162 088

## Description

The invention relates to manufacturing methods of an electricity storage device such as a capacitor and a battery.

Documents JP 2007-220696 A and JP 2008-258222 A and Japanese Patent No. 4441976 describe electricity storage devices such as a capacitor and a battery, which include an electricity storage member in which positive electrode foils and negative electrode foils are alternately stacked with separator foils interposed therebetween.

The electricity storage member described in JP 2007-220696 A is manufactured by placing folded separator foils between the positive electrode foils and the negative electrode foils, and moving the positive electrode foils and the negative electrode foils toward each other. The electricity storage member described in JP 2008-258222 A is manufactured by stacking a positive electrode material foil having a length equal to the sum of the lengths of a multiplicity of positive electrode foils, a negative electrode material foil having a length equal to the sum of the lengths of a multiplicity of negative electrode foils, and separator foils interposed between the positive and negative electrode material foils, and winding or zigzag-folding the stack. The electricity storage member described in Japanese Patent No. 4441976 is manufactured by stacking a positive electrode material foil having a length equal to the sum of the lengths of a multiplicity of positive electrode foils, a negative electrode material foil having a length equal to the sum of the lengths of a multiplicity of negative electrode foils, and separator foils interposed between the positive and negative electrode material foils, and zigzag-folding the stack.

The region where the positive electrode foil and the negative electrode foil overlap each other affects performance of the capacitor or the battery. If the positive electrode foil and the negative electrode foil are offset from each other, this overlapping region is reduced, and the size of the capacitor or the battery need be increased accordingly in order to ensure the electricity storage capacity. It is therefore desired to accurately position the positive electrode foils and the negative electrode foils in order to reduce the size while improving performance.

In the electricity storage member described in JP 2007-220696 A, it is not easy to accurately position the positive electrode foils and the negative electrode foils. In this electricity storage member, the positive electrode foils and the negative electrode foils can be positioned by using fold lines in the separator foils. However, this is not easy because of low rigidity of the separator foils.

The electricity storage member described in JP 2008-258222 A is formed by winding or zigzag-folding the stack of the positive electrode material foil, the negative electrode material foil, and the separator foil. Accordingly, the area of the region (non-deposited portion) that does not affect performance is increased as the number of turns is increased. The size of the electricity storage member is therefore increased as the number of turns is increased. In the electricity storage member described in Japanese Patent No. 4441976, it is not easy to fold the strip-shaped positive electrode material foil, the strip-shaped separator foil, and the strip-shaped negative electrode material foil at accurate folding positions. Accordingly, the size of this electricity storage member may be increased as the number of stacks is increased.

Document US 2003/0162088 A discloses a coin type battery having a structure that contributes to an improved discharge capacity and prevent deposition of lithium metal. A positive electrode plate and a negative electrode plate are folded at their connecting pieces and coiled around into a flat shape to construct an electrode plate group such that layer faces of the positive electrode plate and layer faces of the negative electrode plate are alternately layered upon one another with a separator interposed therebetween. The electrode plate group is accommodated in a battery case made of a cap case having an open end and a sealing case for sealing this open end. An insulating member is provided to a connecting piece of the positive electrode plate that is to be located at the center when the electrode plates are coiled around, on a face opposite one end of the negative electrode plate.

Document JP 2000-353643 A which is considered closest prior art discloses an Electric Double-Layer Capacitor. Here, a first elongated active carbon cloth having nearly the same shape as that of an elongated separator is overlapped with one surface of the separator impregnated with an electrolyte solution and alternately folded back in different directions by each prescribed length. An elongated aluminum foil having nearly the same shape as that of the first cloth is overlapped with the first cloth. A second elongated active carbon cloth having nearly the same shape as that of the separator is overlapped with the other surface of the separator. A second elongated aluminum foil having nearly the same shape as that of the second cloth is overlapped with the second cloth and then pushed there against, to continuously form a 5-layer electrode member of the first aluminum foil, first cloth, separator, second cloth and second aluminum foil.

It is the object of the invention to provide a method for manufacturing an electricity storage device capable of achieving both improved performance and a reduced size.

A method for manufacturing an electricity storage device according to one aspect of the invention is a method for manufacturing an electricity storage device including an electricity storage member in which positive electrode foils and negative electrode foils are alternately stacked with separator foils interposed therebetween, including:
a positive electrode folding in which a positive electrode material foil having a length equal to a sum of lengths of two of the positive electrode foils is folded in a middle;
a negative electrode folding in which a negative electrode material foil having a length equal to a sum of lengths of two of the negative electrode foils is folded in a middle;
an initial arranging in which the positive electrode material foil and the negative electrode material foil are arranged with the separator foils interposed therebetween such that an opening of the folded positive electrode material foil faces an opening of the folded negative electrode material foil; and
a positioning in which the positive electrode material foil and the negative electrode material foil are positioned by relatively moving the folded positive electrode material foil and the folded negative electrode material foil closer to each other so as to insert one end of a second material foil among the positive and negative electrode material foils from the opening of a first material foil among the positive and negative electrode material foils toward a bottom of a valley of the first material foil, and in which the one end of the second material foil is restrained with the bottom of the valley of the first material foil.

As described above, the electricity storage member uses the positive electrode material foil having a length equal to the sum of the lengths of the two positive electrode foils and the negative electrode material foil having a length equal to the sum of the lengths of the two negative electrode foils. The positive electrode material foil and the negative electrode material foil are positioned as the one end of the folded second material foil is restrained by the bottom of the valley of the folded first material foil. Because the positive electrode material foil is more rigid than the separator foil, rigidity at the bottom of the valley of the first material foil is higher than that at the fold line of the separator foil. The positive electrode material foil and the negative electrode material foil are thus accurately positioned by the above positioning method. As a result, the electricity storage device manufactured as described above can achieve both improved performance and a reduced size.

According to another aspect of the invention, in the manufacturing method of the above aspect,
the positive electrode material foil may include a positive current collector foil and positive electrode active material layers placed on both surfaces of the positive current collector foil.

The negative electrode material foil may include a negative current collector foil and negative electrode active material layers placed on both surfaces of the negative current collector foil.

A single unit may include one positive electrode material foil, one negative electrode material foil, and one separator foil that is interposed between the one positive electrode material foil and the one negative electrode material foil,
and the single unit may be formed by the positive electrode folding, the negative electrode folding, the initial arranging, and the positioning. The electricity storage member may be manufactured by stacking a plurality of the units.

The positive electrode material foil and the negative electrode material foil are thus accurately positioned in each unit. A multi-layer electricity storage member is formed by positioning the plurality of units. An electricity storage device capable of both improved performance and a reduced size is thus manufactured. Moreover, each of the positive electrode material foil and the negative electrode material foil has the active material layers on both surfaces of its corresponding current collector foil. The electricity storage member is manufactured by stacking the plurality of units. That is, in the case where the positive electrode material foil is exposed at an end face of one unit, the negative electrode material foil is exposed at an end face of another unit to be stacked on this unit. This allows an overlapping portion where the positive electrode material foil of one unit faces the negative electrode material foil of a unit adjoining this unit to have a function to store electricity. Accordingly, the electricity storage device having the above configuration can improve electricity storage performance while reducing the number of positive electrode material foils and negative electrode material foils.

According to still another aspect of the invention, in the manufacturing method of the above aspect,
in the positive electrode folding, each of a plurality of the positive electrode material foils may be folded in the middle.

In the negative electrode folding, each of a plurality of the negative electrode material foils may be folded in the middle.

In the initial arranging, relative movement of the plurality of positive electrode material foils may be restricted to each other, or the plurality of negative electrode material foils may be restricted to each other.

In the positioning, the plurality of positive electrode material foils and the plurality of negative electrode material foils may be positioned by relatively moving the plurality of folded positive electrode material foils and the plurality of folded negative electrode material foils closer to each other so as to insert one ends of second material foils among the positive and negative electrode material foils, which face bottoms of valleys of first material foils among the positive and negative electrode material foils, from openings of the first material foils toward the bottoms of the valleys of the first material foils, and the one ends of the second material foils may be restrained with the bottoms of the valleys of the first material foils.

In the above manufacturing method, relative movement of the plurality of positive electrode material foils or the plurality of negative electrode material foils is restricted. The plurality of positive electrode material foils or the plurality of negative electrode material foils can therefore be accurately positioned with respect to each other. In this state, the positive and negative electrode material foils are moved toward each other, whereby the positive and negative electrode material foils are positioned so that each positive electrode material foil overlaps a corresponding one of the negative electrode material foils. In each unit, the positive and negative electrode material foils are accurately positioned as one end of the second material foil is restrained by the bottom of the valley of the first material foil as described above. Moreover, because relative movement of the plurality of positive electrode material foils and the plurality of negative electrode material foils is restricted, positioning accuracy of the plurality of units depends on the restriction in the initial state. That is, the plurality of units can be accurately positioned. The electricity storage member can therefore achieve both improved performance and a reduced size.

According to still another aspect of the invention, in the manufacturing method of the above aspect,
the separator foil may be formed in a shape of a single strip.

In the initial arranging, the separator foil may be interposed between the plurality of positive electrode material foils and the plurality of negative electrode material foils. Because the separator foil need not be cut into pieces, manufacturing can be facilitated

According to still another aspect of the invention, in the manufacturing method of the above aspect,
the separator foil may be formed in a strip shape with no fold line.

The separator foil may be folded when the folded positive electrode material foils and the folded negative electrode material foils are relatively moved closer to each other in the positioning. Because no fold line need be formed in advance in the separator foil, manufacturing cost can be reduced. In this case, the separator foil is folded by the positive electrode material foil and the negative electrode material foil.

According to still another aspect of the invention, in the manufacturing method of the above aspect,
the separator foil may be formed in a strip shape with fold lines, and the fold lines may be formed so as to correspond to positions where the ends and the bottoms of the valleys are to be located as a result of positioning the folded positive electrode material foils and the folded negative electrode material foils in the positioning.

The separator foil may be interposed between the positive electrode material foils and the negative electrode material foils by moving the folded positive electrode material foils and the folded negative electrode material foils relatively closer to each other in the positioning. This reduces a tensile force that is applied to the separator foil when the separator foil is pressed by the positive electrode material foil and the negative electrode material foil. The separator foil can therefore be reliably prevented from tearing.

According to still another aspect of the invention, in the manufacturing method of the above aspect,
the positive electrode material foil may include a positive current collector foil and a positive electrode active material layer placed on one surface of the positive current collector foil.

The negative electrode material foil may include a negative current collector foil and a negative electrode active material layer placed on one surface of the negative current collector foil.

The electricity storage member may include a plurality of the positive electrode material foils, a plurality of the negative electrode material foils, and one separator foils interposed between the positive electrode material foils and the negative electrode material foils, and the electricity storage member may be formed by the positive electrode folding, the negative electrode folding, the initial arranging, the positioning, and a stacking the positive electrode material foils, the negative electrode material foils, and the separator foil.

In the positioning, one ends of adjoining two of second material foils among the folded positive and negative electrode material foils may be inserted from an opening of one of first material foils among the folded positive and negative electrode material foils toward a bottom of a valley of the one first material foil.

According to still another aspect of the invention, in the manufacturing method of the above aspect,
in the positive electrode folding, each of the plurality of positive electrode material foils may be folded in the middle.

In the negative electrode folding, each of the plurality of negative electrode material foils may be folded in the middle.

In the initial arranging, relative movement of the plurality of positive electrode material foils is restricted to each other, or the plurality of negative electrode material foils may be restricted to each other,.

In the positioning, the plurality of positive electrode material foils and the plurality of negative electrode material foils may be positioned by relatively moving the plurality of folded positive electrode material foils and the plurality of folded negative electrode material foils closer to each other, and the one ends of the second material foils is restrained with the bottoms of the valleys of the first material foils.

The foregoing and further features and advantages of the invention will become apparent from the following description of example embodiments with reference to the accompanying drawings, wherein like numerals are used to represent like elements and wherein:
FIG. 1 is a schematic perspective view of an electricity storage device according to a first embodiment of the invention;
FIG. 2 is a schematic plan view of the electricity storage device shown in FIG. 1;
FIG. 3 is a perspective view illustrating a method for manufacturing an electricity storage member of the electricity storage device shown in FIG 1;
FIG. 4A shows an initial state in the method for manufacturing the electricity storage member shown in FIG. 3;
FIG. 4B shows a state where a plurality of positive electrode material foils have been moved from the initial state shown in FIG. 4A;
FIG. 4C shows a state where one negative electrode material foil has been moved from the state shown in FIG. 4B;
FIG. 4D shows a state where another one negative electrode material foil has been moved from the state shown in FIG. 4C;
FIG. 4E shows a state where the electricity storage member is manufactured by compressing the positive electrode material foils, the negative electrode material foils, and separator foil in the state shown in FIG. 4D;
FIG. 5 is a diagram showing an initial state in a method for manufacturing an electricity storage member of an electricity storage device according to a second embodiment;
FIG. 6 is a perspective view showing a method for manufacturing an electricity storage member of an electricity storage device according to a third embodiment;
FIG. 7A shows an initial state in the method for manufacturing the electricity storage member shown in FIG. 6;
FIG. 7B shows a state where a plurality of positive electrode material foils have been moved from the initial state shown in FIG. 7A;
FIG. 7C shows a state where one negative electrode material foil has been moved from the state shown in FIG. 7B; and
FIG. 7D shows a state where negative electrode material foils have been sequentially moved from the state shown in FIG. 7C.

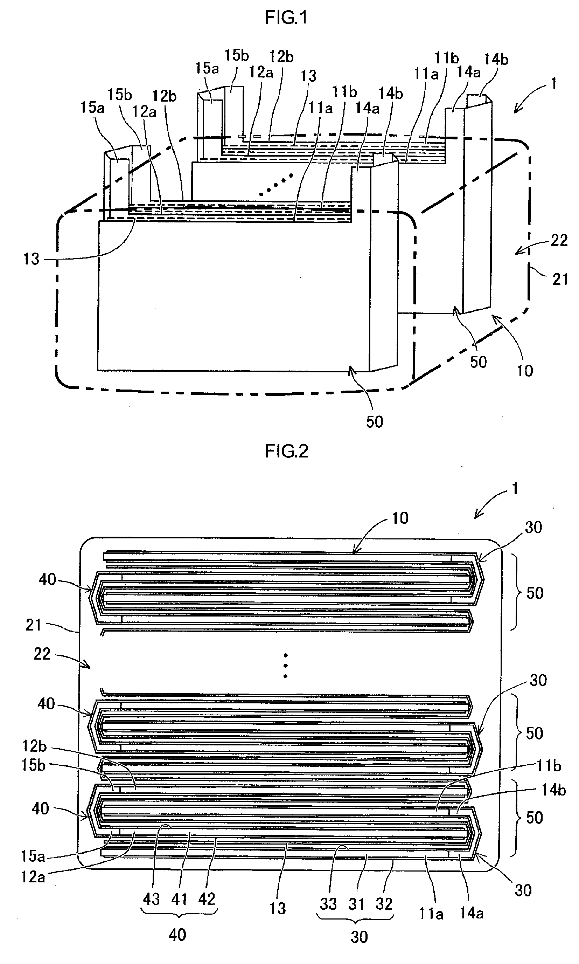

A first embodiment of the invention will be described below with reference to the accompanying drawings. First, the configuration of an electricity storage device will be described. The electricity storage device is a capacitor, a battery, etc. In the present embodiment, a lithium ion capacitor 1 will be described as an example of the electricity storage device. As shown in FIGS. 1 and 2, the lithium ion capacitor 1 includes an electricity storage member 10, a bag-shaped cover 21 (shown by a long dashed double-short dashed line in FIG. 1) that contains and seals the electricity storage member 10, and an electrolyte solution 22 that is enclosed in the cover 21. Although not shown in the figure, the lithium ion capacitor 1 includes a doping member that dopes negative electrode foils 12a, 12b with lithium ions in a manufacturing process.

The electricity storage member 10 includes a plurality of positive electrode foils 11a, 11b, a plurality of negative electrode foils 12a, 12b, a plurality of separator foils 13, positive external terminals 14a, 14b, and negative external terminals 15a, 15b. As shown in FIG. 2, in the electricity storage member 10, the positive electrode foils 11a, 11b and the negative electrode foils 12a, 12b are alternately stacked with the separator foils 13 interposed therebetween. That is, in the electricity storage member 10, the positive electrode foils 11a, 11b, the negative electrode foils 12a, 12b, and the separator foils 13 are repeatedly stacked in order of the positive electrode foil 11a, the separator foil 13, the negative electrode foil 12a, the separator foil 13, the positive electrode foil 11b, the separator foil 13, and the negative electrode foil 12b. The length of each positive electrode foil 11a, 11b corresponds to the lateral width of the electricity storage member 10 shown in FIGS. 1 and 2. The length of each negative electrode foil 12a, 12b corresponds to the lateral width of the electricity storage member 10 shown in FIGS. 1 and 2.

The positive external terminals 14a, 14b are provided integrally with the ends (upper right ends in FIG. 1) of the positive electrode foils 11a, 11b, respectively. The plurality of positive external terminals 14a, 14b are electrically connected by, e.g., welding etc. The negative external terminals 15a, 15b are provided integrally with the ends (upper left ends in FIG. 1) of the negative electrode foils 12a, 12b, respectively. The plurality of negative external terminals 15a, 15b are electrically connected by, e.g., welding etc. The positive external terminals 14a, 14b and the negative external terminals 15a, 15b are terminals for connection with an external device, and are provided so as to protrude from the cover 21.

As shown in FIGS. 1 and 2, adjoining two of the positive electrode foils 11a, 11b and their corresponding positive external terminals 14a, 14b are formed by an integral positive electrode material foil 30. That is, a single positive electrode material foil 30 is folded in the middle to be divided into a surface having the first positive electrode foil 11a and the first positive external terminal 14a and a surface having the second positive electrode foil 11b and the second positive external terminal 14b. That is, the length of the single positive electrode material foil 30 is equal to the sum of the lengths of the two positive electrode foils 11a.

The positive electrode material foil 30 includes a positive current collector foil 31 and positive electrode active material layers 32, 33 provided on both surfaces of the positive current collector foil 31. Each of the positive electrode foils 11a, 11b therefore includes the positive current collector foil 31 and the positive electrode active material layers 32, 33 provided on both surfaces thereof. The positive current collector foil 31 is made of aluminum, an aluminum alloy, etc. The positive electrode active material layers 32, 33 are made of a carbon material capable of reversibly supporting anions and cations, a binder, a conducting agent, etc. Carbon black such as acetylene black or Ketjen black, natural graphite, thermal expansion graphite, carbon fibers, etc. is used as the conducting agent. A fluorine-containing resin such as polytetrafluoroethylene or polyvinylidene fluoride, a rubber binder such as styrene-butadiene rubber, a thermoplastic resin such as polypropylene or polyethylene, etc. is used as the binder.

As shown in FIGS. 1 and 2, adjoining two of the negative electrode foils 12a, 12b and their corresponding negative external terminals 15a, 15b are formed by an integral negative electrode material foil 40. That is, a single negative electrode material foil 40 is folded in the middle to be divided into a surface having the first negative electrode foil 12a and the first negative external terminal 15a and a surface having the second negative electrode foil 12b and the second negative external terminal 15b. That is, the length of the single negative electrode material foil 40 is equal to the sum of the lengths of the two negative electrode foils 12a.

The negative electrode material foil 40 includes a negative current collector foil 41 and negative electrode active material layers 42, 43 provided on both surfaces of the negative current collector foil 41. Each of the negative electrode foils 12a, 12b therefore includes the negative current collector foil 41 and the negative electrode active material layers 42, 43 provided on both surfaces thereof. The negative current collector foil 41 is made of copper, a copper alloy, nickel, stainless steel, etc. The negative electrode active material layers 42, 43 are made of a carbon material such as graphite or amorphous carbon, a binder, a conducting agent, etc. The conducting agent and the binder are similar to those of the positive electrode active material layers 32, 33.

As shown in FIG. 2, the second surface (11b, 14b) of the folded positive electrode material foil 30 is placed inside the folded negative electrode material foil 40. That is, the second surface (11b, 14b) of the positive electrode material foil 30 faces the first surface (12a, 15a) and the second surface (12b, 15b) of the negative electrode material foil 40. The first surface (12a, 15a) of the folded negative electrode material foil 40 is placed inside the folded positive electrode material foil 30. That is, the first surface (12a, 15a) of the negative electrode material foil 40 faces the first surface (11a, 14a) and the second surface (11b, 14b) of the positive electrode material foil 30.

A single continuous strip-shaped separator foil 13 is interposed between the positive electrode material foil 30 and the negative electrode material foil 40. Paper made of viscose rayon or native cellulose, nonwoven fabric made of polyethylene or polypropylene, etc. is used as the separator foil 13. The separator foil 13 need be made of an insulating material the electrolyte solution 22 easily penetrates.

As shown in FIG. 2, the single positive electrode material foil 30, the single negative electrode material foil 40, and the separator foil 13 interposed therebetween form a single unit 50. The electricity storage member 10 is formed by stacking a plurality of units 50. In this case, the separator foil 13 extends continuously in the plurality of units 50.

In the lithium ion capacitor 1 configured as described above, the plurality of positive electrode foils 11a, 11b and the plurality of negative electrode foils 12a, 12b are stacked with the separator foils 13 interposed therebetween. The larger the area where the active material layers 32, 33, 42, 43 of each electrode foil 11a, 11b, 12a, 12b face each other in the lithium ion capacitor 1 is, the higher the performance of the lithium ion capacitor 1 is. The size of the outer shape of the lithium ion capacitor 1 depends on the size of each electrode foil 11a, 11b, 12a, 12b and the magnitude of a positional offset of each electrode foil 11a, 11b, 12a, 12b. That is, the larger the positional offset of each electrode foil 11a, 11b, 12a, 12b is, the larger the size of the lithium ion capacitor 1 becomes. Lithium ion capacitors are desired to have both improved performance and a reduced size. The lithium ion capacitor 1 of the present embodiment achieves both improved performance and a reduced size by using the above configuration and a method for manufacturing the electricity storage member 10 described below.

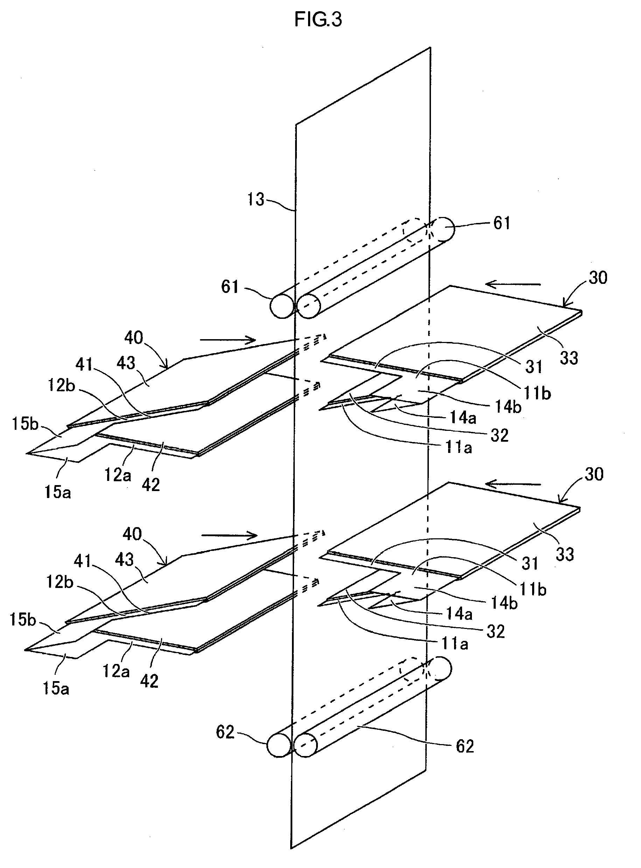

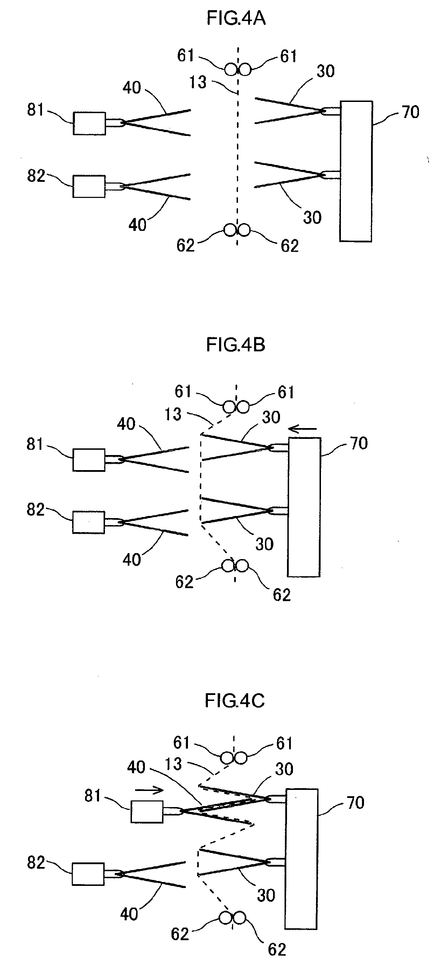

A method for manufacturing the electricity storage member 10 will be described with reference to FIGS. 3 and 4A to 4E. In FIGS. 4A to 4E, the separator foil 13 is shown by dashed lines for convenience. The positive electrode material foil 30 having a length equal to the sum of the lengths of the two positive electrode foils 11a is prepared as shown in FIG. 3. This positive electrode material foil 30 is folded in the middle to form the folded positive electrode material foil 30 (positive electrode folding step). The positive electrode material foil 30 in this state is formed so that the distance between the two sides of the folded positive electrode material foil 30 increases toward the opening. A plurality of such folded positive electrode material foils 30 are prepared.

The negative electrode material foil 40 having a length equal to the sum of the lengths of the two negative electrode foils 12a is prepared. This negative electrode material foil 40 is folded in the middle to form the folded negative electrode material foil 40 (negative electrode folding step). The negative electrode material foil 40 in this state is formed so that the distance between the two sides of the folded negative electrode material foil 40 increases toward the opening. A plurality of such folded negative electrode material foils 40 are prepared.

Then, the separator foil 13 is held by upper rollers 61, 61 and lower rollers 62, 62 and adjusted so as to be subjected to predetermined tension (separator foil placing step). In the present embodiment, the separator foil 13 is formed in a strip shape with no fold line.

As shown in FIGS. 3 and 4A, the folded parts of the plurality of positive electrode material foils 30 are then held by a holding device 70, and are arranged on the first surface side of the separator foil 13 such that the openings of the plurality of positive electrode material foils 30 face the separator foil 13. The folded parts of the plurality of negative electrode material foils 40 are held by holding devices 81, 82, respectively, each capable of moving independently, and are arranged on the second surface side of the separator foil 13 such that the openings of the plurality of negative electrode material foils 40 face the separator foil 13. That is, the plurality of positive electrode material foils 30 and the plurality of negative electrode material foils 40 are arranged with the separator foil 13 interposed therebetween such that the openings of the folded positive electrode material foils 30 face the openings of the folded negative electrode material foils 40 (initial arranging step).

More specifically, as shown in FIG. 4A, the vertical positions of the positive electrode material foil 30 and the negative electrode material foil 40 which form each unit 50 in FIG. 4A are adjusted so that one end of the negative electrode material foil 40 faces the bottom of the valley of the positive electrode material foil 30 and that the bottom of the valley of the negative electrode material foil 40 faces one end of the positive electrode material foil 30.

Then, as the holding device 70 is moved, the plurality of positive electrode material foils 30 are simultaneously brought into contact with the separator foil 13 and moved to a predetermined position shown in FIG. 4B. At this time, the upper rollers 61, 61 and the lower rollers 62, 62 are operated to adjust the tension on the separator foil 13. The holding device 70 integrally holds the plurality of positive electrode material foils 30, and restricts relative movement of the plurality of positive electrode material foils 30. The relative positions of the plurality of positive electrode material foils 30 held by the holding device 70 are therefore always constant.

Thereafter, as shown in FIG. 4C, the holding device 81 holding one negative electrode material foil 40 is moved toward the separator foil 13, i.e., toward the positive electrode material foil 30. First, the opening end of this negative electrode material foil 40 is brought into contact with the separator foil 13. As the negative electrode material foil 40 is further moved, the one end of the negative electrode material foil 40 is inserted from the opening of the single positive electrode material foil 30 toward the bottom of the valley thereof while pressing the separator foil 13. The negative electrode material foil 40 is restrained by the bottom of the valley of the positive electrode material foil 30, and the negative electrode material foil 40 and the positive electrode material foil 30 are thus positioned (positioning step). The one end of the negative electrode material foil 40 is restrained by the bottom of the valley of the positive electrode material foil 30, and at the same time the one end of the positive electrode material foil 30 is restrained by the bottom of the valley of the negative electrode material foil 40. The bottom of the valley of each material foil and one end of its corresponding material foil thus restrain each other, whereby the positive and negative electrode material foils 30, 40 are positioned. Namely, a single unit 50 is formed.

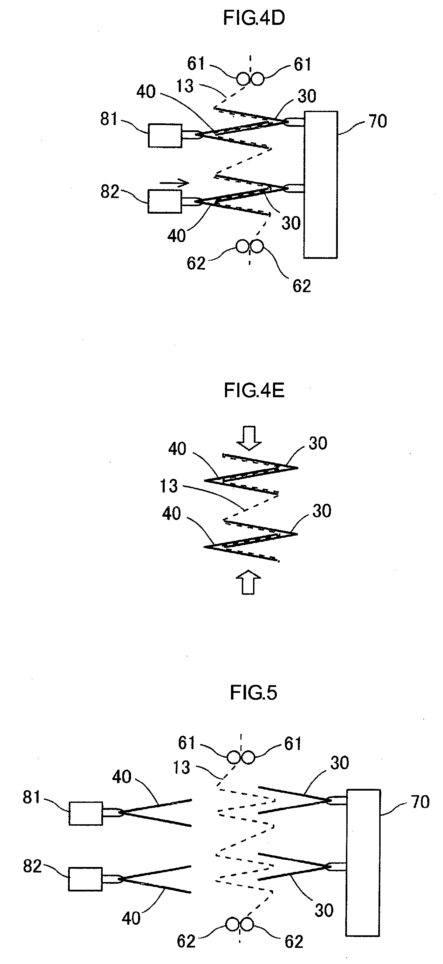

As shown in FIG. 4D, the holding device 82 holding another negative electrode material foil 40 is then moved toward the separator foil 13, i.e., toward the positive electrode material foil 30. The operation in this case is similar to that in the case where the holding device 81 is operated. Another unit 50 is thus formed.

Subsequently, as shown in FIG. 4E, the separator foil 13 is separated from the upper rollers 61, 61 and the lower rollers 62, 62. The plurality of positive electrode material foils 30, the plurality of negative electrode material foils 40, and the separator foil 13, which have been positioned, are then compressed by a force applied in the vertical direction in FIG. 4E, whereby the electricity storage member 10 is manufactured. In this case, relative movement of the members 30, 40, 13 of the electricity storage member 10 in the vertical direction is permitted, but relative movement of the members 30, 40, 13 of the electricity storage member 10 in the lateral direction is restricted. In the above manufacturing method, the holding device 70 may integrally hold the plurality of negative electrode material foils 40, and the holding devices 81, 82 may hold the positive electrode material foils 30, respectively.

Advantageous effects of the present embodiment will be described below. As described above, the electricity storage member 10 uses the positive electrode material foils 30 each having a length equal to the sum of the lengths of two positive electrode foils 11a, and the negative electrode material foils 40 each having a length equal to the sum of the lengths of two negative electrode foils 12a. One end of the folded negative electrode material foil 40 is restrained by the bottom of the valley of the folded positive electrode material foil 30, whereby the positive electrode material foil 30 and the negative electrode material foil 40 are positioned. Because the positive electrode material foil 30 and the negative electrode material foil 40 are more rigid than the separator foil 13, rigidity at the bottoms of the folds of the positive electrode material foil 30 and the negative electrode material foil 40 is higher than that at the fold line of the separator foil 13. The positive electrode material foil 30 and the negative electrode material foil 40 are thus accurately positioned in a manner described above. The manufactured lithium ion capacitor 1 can thus achieve both improved performance and a reduced size.

Moreover, the positive electrode material foil 30 and the negative electrode material foil 40 are accurately positioned in each unit 50. The multi-layer electricity storage member 10 is formed by positioning and stacking the plurality of units 50. The lithium ion capacitor 1 capable of achieving both improved performance and a reduced size is manufactured. Moreover, the positive electrode material foil 30 includes the active material layers 32, 33 on both surfaces of the positive current collector foil 31, and the negative electrode material foil 40 includes the active material layers 42, 43 on both surfaces of the negative current collector foil 41. The electricity storage member 10 is manufactured by stacking the plurality of units 50 as follows. As shown in FIG. 2, in the case where the positive electrode material foil 30 is exposed at a first end face of one unit 50, the negative electrode material foil 40 is exposed at a first end face of another unit 50 to be stacked on this unit 50, namely the unit 50 adjoining this unit 50. This stacking method allows a portion where the positive electrode material foil 30 of one unit 50 faces the negative electrode material foil 40 of the unit 50 adjoining this unit 50 to have a function to store electricity. Accordingly, the lithium ion capacitor 1 having the above configuration can improve electricity storage performance while reducing the number of positive electrode material foils 30 and negative electrode material foils 40.

In particular, the holding device 70 restricts relative movement of the plurality of positive electrode material foils 30. The plurality of positive electrode material foils 30 can therefore be accurately positioned with respect to each other. In this state, the positive and negative electrode material foils 30, 40 are moved toward each other, whereby the positive and negative electrode material foils 30, 40 are positioned so that each positive electrode material foil 30 overlaps a corresponding one of the negative electrode material foils 40. In each unit 50, the positive and negative electrode material foils 30, 40 are accurately positioned as one end of the negative electrode material foil 40 is restrained by the bottom of the valley of the positive electrode material foil 30 as described above. Moreover, because relative movement of the plurality of positive electrode material foils 30 is restricted, positioning accuracy of the plurality of units 50 depends on the initial positions of the plurality of positive electrode material foils 30 held by the holding device 70. That is, the plurality of units 50 can be accurately positioned. The electricity storage member 10 can therefore achieve both improved performance and a reduced size.

The separator foil 13 is formed in the shape of a single strip. In the initial arranging step, the separator foil 13 is interposed between the plurality of positive electrode material foils 30 and the plurality of negative electrode material foils 40. Because the separator foil 13 need not be cut into pieces, manufacturing can be facilitated.

In particular, in the present embodiment, the separator foil 13 is formed in a strip shape with no fold line, and the separator foil 13 is folded as the folded positive electrode material foil 30 and the folded negative electrode material foil 40 are relatively moved toward each other in the positioning step. Because no fold line need be formed in advance in the separator foil 14, manufacturing cost can be reduced. In this case, the separator foil 13 is folded by the positive electrode material foil 30 and the negative electrode material foil 40.

A second embodiment of the invention will be described below. As shown in FIGS. 3 and 4A, the separator foil 13 having a strip shape with no fold line is used in the first embodiment. In the second embodiment, as shown in FIG. 5, the separator foil 13 is formed in a strip shape with fold lines. These fold lines are formed so as to correspond to the positions where the ends and the bottoms of the folds of the folded positive and negative electrode material foils 30, 40 are to be located as a result of positioning the folded positive and negative electrode material foils 30, 40 in the positioning step. In this case, the separator foil 13 is interposed between the positive electrode material foil 30 and the negative electrode material foil 40 as the folded positive electrode material foil 30 and the folded negative electrode material foil 40 are relatively moved toward each other in the positioning step. This reduces a tensile force that is applied to the separator foil 13 when the separator foil 13 is pressed by the positive electrode material foil 30 and the negative electrode material foil 40. The separator foil 13 can therefore be reliably prevented from tearing.

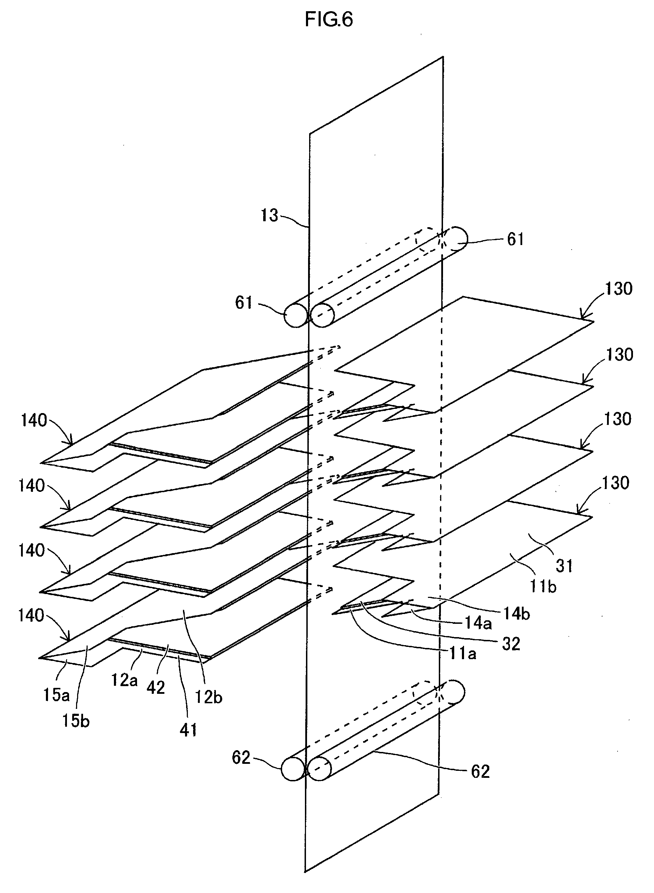

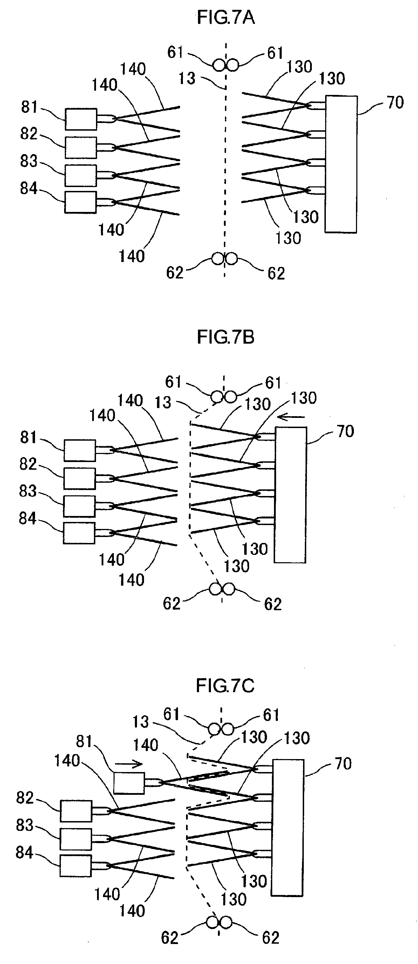

A third embodiment of the invention will be described below. In the first embodiment, the positive electrode material foil 30 has the active material layers 32, 33 on both surfaces of the current collector foil 31, and the negative electrode material foil 40 has the active material layers 42, 43 on both surfaces of the current collector foil 41. Alternatively, positive and negative electrode material foils 130, 140 having an active material layer 32, 42 only on one surface of the current collector foil 31, 41 can be used, respectively. A method for manufacturing the electricity storage member 10 in this case will be described with reference to FIGS. 6 and 7A to 7D.

In the initial arranging step, as shown in FIGS. 6 and 7A, the positive and negative electrode material foils 130, 140 are positioned such that the bottom of the valley of one positive electrode material foil 130 faces one ends of two negative electrode material foils 140 and that the bottom of the valley of one negative electrode material foil 140 faces one ends of two positive electrode material foils 130. The holding device 70 holds the plurality of positive electrode material foils 130. Holding devices 81 to 84 capable of operating independently hold the negative electrode material foils 140, respectively.

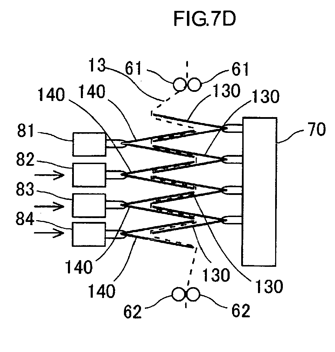

Then, as shown in FIG. 7B, the holding device 70 is moved to bring the plurality of positive electrode material foils 130 into contact with the separator foil 13. Thereafter, as shown in FIG. 7C, the holding device 81 is moved to move one negative electrode material foil 140 toward one positive electrode material foil 130. One end of this negative electrode material foil 140 is restrained by the bottom of the valley of the positive electrode material foil 130, whereby these positive and negative material foils 130, 140 are positioned. The other negative electrode material foils 140 are similarly positioned as shown in FIG. 7D. The positive and negative electrode material foils and the separator foil that have been positioned are compressed in the vertical direction in FIG. 7D. The electricity storage member 10 is thus manufactured.

An electricity storage member (10) in an electricity storage device (1) is manufactured by a step of folding a positive electrode material foil (30) and folding a negative electrode material foil (40), a step of arranging the positive and negative electrode material foils (30), (40) with a separator foil (13) interposed therebetween, and a step of positioning the positive and negative electrode material foils by relatively moving the positive and negative electrode material foils (30), (40) toward each other so as to insert one end of a second material foil among the positive and negative electrode material foils into a bottom of a valley of the first material foil, and restraining the one end of the second material foil with the bottom of the valley of the first material foil.

## Claims

1. A method for manufacturing an electricity storage device (1) including an electricity storage member (10) in which positive electrode foils (11a, 11b) and negative electrode foils (12a, 12b) are alternately stacked with separator foils (13) interposed therebetween, comprising:
a positive electrode folding;
a negative electrode folding; and
an initial arranging in which a positive electrode material foil (30) and a negative electrode material foil (40) are arranged with the separator foils (13) interposed therebetween such that an opening of the folded positive electrode material foil (30) faces an opening of the folded negative electrode material foil (40);
**characterized by**
a positioning in which the positive electrode material foil (30) and the negative electrode material foil (40) are positioned by relatively moving the folded positive electrode material foil (30) and the folded negative electrode material foil (40) closer to each other so as to insert one end of a second material foil (11b; 12b) among the positive and negative electrode material foils (11a, 11b; 12a, 12b) from the opening of a first material foil (11a; 12a) among the positive and negative electrode material foils (11a, 11b; 12a, 12b) toward a bottom of a valley of the first material foil (11a; 12a), and in which the one end of the second material foil (11b; 12b) is restrained with the bottom of the valley of the first material foil (11a; 12a), wherein
in the positive electrode folding the positive electrode material foil (30) having a length equal to a sum of lengths of two of the positive electrode foils (11a, 11b) is folded in a middle; and
in the negative electrode folding the negative electrode material foil (40) having a length equal to a sum of lengths of two of the negative electrode foils (12a, 12b) is folded in a middle.

2. The method for manufacturing an electricity storage device (1) according to claim 1, wherein
the positive electrode material foil (30) includes a positive current collector foil (31) and positive electrode active material layers (32, 33) placed on both surfaces of the positive current collector foil (31), and
the negative electrode material foil (40) includes a negative current collector foil (41) and negative electrode active material layers (42, 43) placed on both surfaces of the negative current collector foil (41), wherein
a single unit (50) includes one positive electrode material foil (30), one negative electrode material foil (40), and one separator foil (13) that is interposed between the one positive electrode material foil (30) and the one negative electrode material foil (40), and the single unit (50) is formed by the positive electrode folding, the negative electrode folding, the initial arranging, and the positioning, wherein
the electricity storage member (10) is manufactured by stacking a plurality of the units (50).

3. The method for manufacturing an electricity storage device (1) according to claim 2, wherein
in the positive electrode folding, each of a plurality of the positive electrode material foils (30) is folded in the middle,
in the negative electrode folding, each of a plurality of the negative electrode material foils (40) is folded in the middle,
in the initial arranging, relative movement of the plurality of positive electrode material foils (30) is restricted to each other, or relative movement of the plurality of negative electrode material foils (40) is restricted to each other, and
in the positioning, the plurality of positive electrode material foils (30) and the plurality of negative electrode material foils (40) are positioned by relatively moving the plurality of folded positive electrode material foils (30) and the plurality of folded negative electrode material foils (40) closer to each other so as to insert one end of second material foils among the positive and negative electrode material foils (30, 40), which face bottoms of valleys of first material foils among the positive and negative electrode material foils (30, 40), from openings of the first material foils toward the bottoms of the valleys of the first material foils, and the one ends of the second material foils is restrained with the bottoms of the valleys of the first material foils.

4. The method for manufacturing an electricity storage device (1) according to any one of claims 1 to 3, wherein
the separator foil (13) is formed in a shape of a single strip, and
in the initial arranging, the separator foil (13) is interposed between the plurality of positive electrode material foils (30) and the plurality of negative electrode material foils (40).

5. The method for manufacturing an electricity storage device according to claim 4, wherein
the separator foil (13) is formed in a strip shape with no fold line, and the separator foil (13) is folded when the folded positive electrode material foils (30) and the folded negative electrode material foils (40) are relatively moved closer to each other in the positioning.

6. The method for manufacturing an electricity storage device (1) according to claim 4, wherein
the separator foil (13) is formed in a strip shape with fold lines, and the fold lines are formed so as to correspond to positions where the ends and the bottoms of the valleys are to be located as a result of positioning the folded positive electrode material foils (30) and the folded negative electrode material foils (40) in the positioning, and
the separator foil (13) is interposed between the positive electrode material foils (30) and the negative electrode material foils (40) by moving the folded positive electrode material foils (30) and the folded negative electrode material foils (40) relatively closer to each other in the positioning.

7. The method for manufacturing an electricity storage device according to claim 1, wherein
the positive electrode material foil (30) includes a positive current collector foil (31) and a positive electrode active material layer (32, 33) placed on one surface of the positive current collector foil (31), and
the negative electrode material foil (40) includes a negative current collector foil (41) and a negative electrode active material layer (42, 43) placed on one surface of the negative current collector foil (41), wherein
the electricity storage member includes a plurality of the positive electrode material foils (30), a plurality of the negative electrode material foils (40), and one separator foil (13) interposed between the positive electrode material foils (30) and the negative electrode material foils (40), and the electricity storage member (10) is formed by the positive electrode folding, the negative electrode folding, the initial arranging, the positioning, and stacking the positive electrode material foils (30), the negative electrode material foils (40), and the separator foil (13), wherein
in the positioning, one ends of adjoining two of second material foils among the folded positive and negative electrode material foils (30, 40) are inserted from an opening of one of first material foils among the folded positive and negative electrode material foils (30, 40) toward a bottom of a valley of the one first material foil.

8. The method for manufacturing an electricity storage device (1) according to claim 7, wherein
in the positive electrode folding, each of the plurality of positive electrode material foils (30) is folded in the middle,
in the negative electrode folding, each of the plurality of negative electrode material foils (40) is folded in the middle,
in the initial arranging, relative movement of the plurality of positive electrode material foils (30) is restricted to each other, or the plurality of negative electrode material foils (40) is restricted to each other, and
in the positioning, the plurality of positive electrode material foils (30) and the plurality of negative electrode material foils (40) are positioned by relatively moving the plurality of folded positive electrode material foils (30) and the plurality of folded negative electrode material foils (40) closer to each other, and the one ends of the second material foils are restrained with the bottoms of the valleys of the first material foils.

9. The method for manufacturing an electricity storage device (1) according to claim 7 or 8, wherein
the separator is formed in a shape of a single strip, and
in the initial arranging, the separator foil (13) is interposed between the plurality of positive electrode material foils (30) and the plurality of negative electrode material foils (40).

10. The method for manufacturing an electricity storage device (1) according to claim 9, wherein
the separator foil (13) is formed in a strip shape with no fold line, and
the separator foil (13) is folded when the folded positive electrode material foils (30) and the folded negative electrode material foils (40) are relatively moved closer to each other in the positioning.

11. The method for manufacturing an electricity storage device (1) according to claim 9, wherein
the separator foil (13) is formed in a strip shape with fold lines, and the fold lines are formed so as to correspond to positions where the ends and the bottoms of the valleys are to be located as a result of positioning the folded positive electrode material foils (30) and the folded negative electrode material foils (40) in the positioning, and
the separator foil (13) is interposed between the positive electrode material foils (30) and the negative electrode material foils (40) by moving the folded positive electrode material foils (30) and the folded negative electrode material foils (40) relatively moved closer to each other in the positioning.

## Patentansprüche

1. Verfahren zum Herstellen einer Elektrizitätsspeichervorrichtung (1) mit einem Elektrizitätsspeicherelement (10), in dem positive Elektrodenfolien (11a, 11b) und negative Elektrodenfolien (12a, 12b) mit dazwischen eingefügten Separatorfolien (13) abwechselnd gestapelt sind, mit:
einem positiven Elektroden Falten;
einem negativen Elektroden Falten; und
einer Anfangsanordnung, in der eine Folie (30) aus positivem Elektrodenmaterial und eine Folie (40) aus negativem Elektrodenmaterial mit den dazwischen eingefügten Separatorfolien (13) derart angeordnet sind, dass eine Öffnung der gefalteten positiven Elektrodenmaterialfolie (30) zu einer Öffnung der gefalteten negativen Elektrodenmaterialfolie (40) gerichtet ist;
**gekennzeichnet durch**
eine Positionierung, in der die positive Elektrodenmaterialfolie (30) und die negative Elektrodenmaterialfolie (40) **durch** Relativbewegen der gefalteten positiven Elektrodenmaterialfolie (30) und der gefalteten negativen Elektrodenmaterialfolie (40) näher zueinander positioniert werden, um ein Ende einer zweiten Materialfolie (11b, 12b) unter den positiven und negativen Elektrodenmaterialfolien (11a, 11b; 12a, 12b) von der Öffnung einer ersten Materialfolie (11a; 12a) unter den positiven und negativen Elektrodenmaterialfolien (11a, 11b; 12a, 12b) zu einem Boden eines Tals der ersten Materialfolie (11a; 12a) einzufügen, und in dem das eine Ende der zweiten Materialfolie (11b; 12b) mit dem Boden des Tals der ersten Materialfolie (11a; 12a) beschränkt wird, wobei
in dem positiven Elektroden Falten die positive Elektrodenmaterialfolie (30), die eine Länge gleich einer Summe von Längen der zwei positiven Elektrodenfolien (11a, 11b) aufweist, in einer Mitte gefaltet wird; und
in dem negativen Elektroden Falten die negative Elektrodenmaterialfolie (40), die eine Länge gleich einer Summe von Längen von zwei der negativen Elektrodenfolien (12a, 12b) aufweist, in einer Mitte gefaltet wird.

2. Verfahren zum Herstellen einer Elektrizitätsspeichervorrichtung (1) nach Anspruch 1, wobei
die positive Elektrodenmaterialfolie (30) eine positive Stromsammelfolie (31) und positive Elektrodenaktivmaterialschichten (32, 33) hat, die auf beiden Oberflächen der positiven Stromsammelfolie (31) platziert sind, und
die negative Elektrodenmaterialfolie (40) eine negative Stromsammelfolie (41) und negative Elektrodenaktivmaterialschichten (42, 43) hat, die an beiden Oberflächen der negativen Stromsammelfolie (41) platziert sind, wobei
eine einzelne Einheit (50) eine positive Elektrodenmaterialfolie (30), eine negative Elektrodenmaterialfolie (40) und eine Separatorfolie (13) hat, die zwischen die eine positive Elektrodenmaterialfolie (30) und die eine negative Elektrodenmaterialfolie (40) eingefügt ist, und die einzelne Einheit (50) durch die positive Elektrodenfaltung, die negative Elektrodenfaltung, die Anfangsanordnung und die Positionierung ausgebildet wird, wobei
das Elektrizitätsspeicherelement (10) durch Stapeln einer Mehrzahl der Einheiten (50) hergestellt wird.

3. Verfahren zum Herstellen einer Elektrizitätsspeichervorrichtung (1) nach Anspruch 2, wobei
in dem positiven Elektroden Falten jede einer Mehrzahl der positiven Elektrodenmaterialfolien (30) in der Mitte gefaltet wird,
in dem negativen Elektroden Falten, jede einer Mehrzahl der negativen Elektrodenmaterialfolien (40) in der Mitte gefaltet wird,
in der Anfangsanordnung eine relative Bewegung der Mehrzahl der positiven Elektrodenmaterialfolien (30) zueinander beschränkt ist, oder eine relative Bewegung der Mehrzahl der negativen Elektrodenmaterialfolien (40) zueinander beschränkt ist, und
in der Positionierung die Mehrzahl der positiven Elektrodenmaterialfolien (30) und die Mehrzahl der negativen Elektrodenmaterialfolien (40) durch relatives Bewegen der Mehrzahl der gefalteten positiven Elektrodenmaterialfolien (30) und der Mehrzahl der gefalteten negativen Elektrodenmaterialfolien (40) näher zueinander positioniert werden, um ein Ende der zweiten Materialfolien unter den positiven und negativen Elektrodenmaterialfolien unter dem positiven und negativen Elektrodenmaterialfolien (30, 40), die zu Boden der Täler der ersten Materialfolien unter den positiven und negativen Elektrodenmaterialfolien (30, 40) gerichtet sind, von Öffnungen der ersten Materialfolien zu den Böden der Täler der ersten Materialfolien eingefügt werden, und die einen Enden der zweiten Materialfolien mit den Böden der Täler der ersten Materialfolien beschränkt sind

4. Verfahren zum Herstellen einer Elektrizitätsspeichervorrichtung (1) nach einem der Ansprüche 1 bis 3, wobei
die Separatorfolie (13) in einer Form eines einzelnen Streifens ausgebildet, und
in der Anfangsanordnung die Separatorfolie (13) zwischen die Mehrzahl der positiven Elektrodenmaterialfolien (30) und die Mehrzahl der negativen Elektrodenmaterialfolien (40) eingefügt wird.

5. Verfahren zum Herstellen einer Elektrizitätsspeichervorrichtung nach Anspruch 4, wobei
die Separatorfolie (13) in Streifenform ohne Faltungslinie ausgebildet ist, und
die Separatorfolie (13) gefaltet wird, wenn die gefalteten positiven Elektrodenmaterialfolien (30) und die gefalteten negativen Elektrodenmaterialfolien (40) relativ näher zueinander in der Positionierung bewegt werden.

6. Verfahren zum Herstellen einer Elektrizitätsspeichervorrichtung (1) nach Anspruch 4, wobei
die Separatorfolie (13) in einer Streifenform mit Faltungslinien ausgebildet ist, und die Faltungslinien so ausgebildet sind, dass sie Positionen entsprechen, wo die Enden und die Böden der Täler als Ergebnis der Positionierung der gefalteten positiven Elektrodenmaterialfolien (30) und der gefalteten negativen Elektrodenmaterialfolien (40) in der Positionierung entsprechen, und
die Separatorfolie (13) zwischen die positiven Elektrodenmaterialfolien (30) und die negativen Elektrodenmaterialfolien (40) durch Bewegen der positiven Elektrodenmaterialfolien (30) und der gefalteten negativen Elektrodenmaterialfolien (40) relativ näher zueinander in der Positionierung eingefügt wird.

7. Verfahren zum Herstellen einer Elektrizitätsspeichervorrichtung nach Anspruch 1, wobei
die positive Elektrodenmaterialfolie (30) eine positive Stromsammelfolie (31) und eine positive Elektrodenaktivmaterialschicht (32, 33) hat, die an einer Oberfläche der positiven Stromsammelfolie (31) platziert ist, und
die negative Elektrodenmaterialfolie (40) eine negative Stromsammelfolie (41) und eine negative Elektrodenaktivmaterialschicht (42, 43) hat, die auf einer Oberfläche der negativen Stromsammeloberfläche (41) platziert ist, wobei
das Elektrizitätsspeicherelement eine Mehrzahl der positiven Elektrodenmaterialfolien (30), eine Mehrzahl der negativen Elektrodenmaterialfolien (40) und eine zwischen die positiven Elektrodenmaterialfolien (30) und die negativen Elektrodenmaterialfolien (40) eingefügte Separatorfolie (13) hat, und das Elektrizitätsspeicherelement (10) durch das Falten der positiven Elektrode, das Falten der negativen Elektrode, die Anfangsanordnung, die Positionierung und Stapeln der positiven Elektrodenmaterialfolien (30), der negativen Elektrodenmaterialfolien (40) und der Separatorfolie (13) ausgebildet wird, wobei
in der Positionierung erste Enden von angrenzenden zwei der zweiten Materialfolien und den gefalteten positiven und negativen Elektrodenmaterialfolien (30, 40) von einer Öffnung von einer der ersten Elektrodenmaterialfolien unter den gefalteten positiven und negativen Elektrodenmaterialfolien (30, 40) zu einem Boden eines Tals der einen ersten Materialfolie eingefügt sind.

8. Verfahren zum Herstellen einer Elektrizitätsspeichervorrichtung (1) nach Anspruch 7, wobei
in dem positiven Elektroden Falten jede der positiven Elektrodenmaterialfolien (30) in der Mitte gefaltet wird,
in dem negativen Elektroden Falten jede der Mehrzahl der negativen Elektrodenmaterialfolien (40) in der Mitte gefaltet wird,
in der Anfangsanordnung eine relative Bewegung der Mehrzahl der positiven Elektrodenmaterialfolien (30) zueinander beschränkt ist, oder die Mehrzahl der negativen Elektrodenmaterialfolien (40) zueinander beschränkt ist, und
in der Positionierung die Mehrzahl der positiven Elektrodenmaterialfolien (30) und die Mehrzahl der negativen Elektrodenmaterialfolien (40) durch relatives Bewegen der Mehrzahl der gefalteten positiven Elektrodenmaterialfolien (30) und der Mehrzahl der gefalteten negativen Elektrodenmaterialfolien (40) näher zueinander positioniert werden, und die einen Enden der zweiten Materialfolien mit den Böden der Täler der ersten Materialfolien beschränkt werden.

9. Verfahren zum Herstellen einer Elektrizitätsspeichervorrichtung (1) nach Anspruch 7 oder 8, wobei
der Separator in einer Form eines einzelnen Streifens ausgebildet wird, und
in der Anfangsanordnung die Separatorfolie (13) zwischen der Mehrzahl der positiven Elektrodenmaterialfolien (30) und der Mehrzahl der negativen Elektrodenmaterialfolien (40) eingefügt wird.

10. Verfahren zum Herstellen einer Elektrizitätsspeichervorrichtung (1) nach Anspruch 9, wobei
die Separatorfolie (13) in einer Streifenform ohne Faltungslinien ausgebildet ist, und
die Separatorfolie (13) gefaltet wird, wenn die gefalteten positiven Elektrodenmaterialfolien (30) und die gefalteten negativen Elektrodenmaterialfolien (40) relativ näher zueinander in der Positionierung bewegt werden.

11. Verfahren zum Herstellen einer Elektrizitätsspeichervorrichtung (1) nach Anspruch 9, wobei
die Separatorfolie (13) in einer Streifenfolie mit Faltungslinien ausgebildet, und die Faltungslinien so ausgebildet sind, dass sie Positionen entsprechen, wo die Enden und die Böden der Täler als Ergebnis der Positionierung der gefalteten positiven Elektrodenmaterialfolien (30) und der gefalteten negativen Elektrodenmaterialfolien (40) in der Positionierung anzuordnen sind, und
die Separatorfolie (13) zwischen die positiven Elektrodenmaterialfolien (30) und die negativen Elektrodenmaterialfolien (40) durch Bewegen der gefalteten positiven Elektrodenmaterialfolien (30) und der gefalteten negativen Elektrodenmaterialfolien (40), die relativ näher zueinander in der Positionierung bewegt werden, eingefügt wird.

## Revendications

1. Procédé pour fabriquer un dispositif de stockage d'électricité (1) comprenant un élément de stockage d'électricité (10) dans lequel des feuilles d'électrode positive (11a, 11b) et des feuilles d'électrode négative (12a, 12b) sont empilées alternativement avec des feuilles de séparateur (13) interposées entre elles, comprenant :
un pliage d'électrode positive ;
un pliage d'électrode négative ; et
un agencement initial dans lequel une feuille de matériau d'électrode positive (30) et une feuille de matériau d'électrode négative (40) sont agencées avec les feuilles de séparateur (13) interposées entre elles de sorte qu'une ouverture de la feuille de matériau d'électrode positive pliée (30) soit orientée vers une ouverture de la feuille de matériau d'électrode négative pliée (40) ;
**caractérisé par**
un positionnement dans lequel la feuille de matériau d'électrode positive (30) et la feuille de matériau d'électrode négative (40) sont positionnées en déplaçant de manière relative la feuille de matériau d'électrode positive pliée (30) et la feuille de matériau d'électrode négative pliée (40) plus près l'une de l'autre de manière à insérer une extrémité d'une deuxième feuille de matériau (11b ; 12b) parmi les feuilles de matériau d'électrodes positive et négative (11a, 11b ; 12a, 12b) de l'ouverture d'une première feuille de matériau (11a ; 12a) parmi les feuilles de matériau d'électrodes positive et négative (11a, 11b; 12a, 12b) vers un fond d'un creux de la première feuille de matériau (11a ; 12a), et dans lequel ladite extrémité de la deuxième feuille de matériau (11b ; 12b) est limitée par le fond du creux de la première feuille de matériau (11a ; 12a), dans lequel
pour le pliage d'électrode positive, la feuille de matériau d'électrode positive (30) ayant une longueur égale à une somme des longueurs de deux des feuilles d'électrode positive (11a, 11b) est pliée au milieu ; et
pour le pliage d'électrode négative, la feuille de matériau d'électrode négative (40) ayant une longueur égale à une somme des longueurs de deux des feuilles d'électrode négative (12a, 12b) est pliée au milieu.

2. Procédé pour fabriquer un dispositif de stockage d'électricité (1) selon la revendication 1, dans lequel
la feuille de matériau d'électrode positive (30) comprend une feuille de collecteur de courant positif (31) et des couches de matériau actif d'électrode positive (32, 33) placées sur les deux surfaces de la feuille de collecteur de courant positif (31), et
la feuille de matériau d'électrode négative (40) comprend une feuille de collecteur de courant négatif (41) et des couches de matériau actif d'électrode négative (42, 43) placées sur les deux surfaces de la feuille de collecteur de courant négatif (41), dans lequel
une unité (50) unique comprend une feuille de matériau d'électrode positive (30), une feuille de matériau d'électrode négative (40), et une feuille de séparateur (13) qui est interposée entre ladite feuille de matériau d'électrode positive (30) et ladite feuille de matériau d'électrode négative (40), et l'unité (50) unique est formée par le pliage d'électrode positive, le pliage d'électrode négative, l'agencement initial, et le positionnement, dans lequel
l'élément de stockage d'électricité (10) est fabriqué en empilant une pluralité des unités (50).

3. Procédé pour fabriquer un dispositif de stockage d'électricité (1) selon la revendication 2, dans lequel
pour le pliage d'électrode positive, chacune d'une pluralité des feuilles de matériau d'électrode positive (30) est pliée au milieu,
pour le pliage d'électrode négative, chacune d'une pluralité des feuilles de matériau d'électrode négative (40) est pliée au milieu,
pour l'agencement initial, le déplacement relatif de la pluralité de feuilles de matériau d'électrode positive (30) les unes par rapport aux autres est limité, ou le déplacement relatif de la pluralité de feuilles de matériau d'électrode négative (40) les unes par rapport aux autres est limité, et
pour le positionnement, la pluralité de feuilles de matériau d'électrode positive (30) et la pluralité de feuilles de matériau d'électrode négative (40) sont positionnées en déplaçant de manière relative la pluralité de feuilles de matériau d'électrode positive pliées (30) et la pluralité de feuilles de matériau d'électrode négative pliées (40) plus près les unes des autres de manière à insérer une extrémité des deuxièmes feuilles de matériau parmi les feuilles de matériau d'électrodes positive et négative (30, 40), qui sont orientées vers les fonds des creux des premières feuilles de matériau parmi les feuilles de matériau d'électrodes positive et négative (30, 40), des ouvertures des premières feuilles de matériau vers les fonds des creux des premières feuilles de matériau, et lesdites extrémités des deuxièmes feuilles de matériau sont limitées par les fonds des creux des premières feuilles de matériau.

4. Procédé pour fabriquer un dispositif de stockage d'électricité (1) selon l'une quelconque des revendications 1 à 3, dans lequel
la feuille de séparateur (13) est réalisée en la forme d'une bande unique, et
pour l'agencement initial, la feuille de séparateur (13) est interposée entre la pluralité de feuilles de matériau d'électrode positive (30) et la pluralité de feuilles de matériau d'électrode négative (40).

5. Procédé pour fabriquer un dispositif de stockage d'électricité selon la revendication 4, dans lequel
la feuille de séparateur (13) est réalisée en la forme d'une bande sans ligne de pliage, et
la feuille de séparateur (13) est pliée lorsque les feuilles de matériau d'électrode positive pliées (30) et les feuilles de matériau d'électrode négative pliées (40) sont déplacées de manière relative plus près les unes des autres pour le positionnement.

6. Procédé pour fabriquer un dispositif de stockage d'électricité (1) selon la revendication 4, dans lequel
la feuille de séparateur (13) est réalisée en la forme d'une bande avec des lignes de pliage, et les lignes de pliage sont formées de manière à correspondre aux positions où les extrémités et les fonds des creux doivent être situés en conséquence du positionnement des feuilles de matériau d'électrode positive pliées (30) et des feuilles de matériau d'électrode négative pliées (40) pour le positionnement, et
la feuille de séparateur (13) est interposée entre les feuilles de matériau d'électrode positive (30) et les feuilles de matériau d'électrode négative (40) en déplaçant les feuilles de matériau d'électrode positive pliées (30) et les feuilles de matériau d'électrode négative pliées (40) de manière relative plus près les unes des autres pour le positionnement.

7. Procédé pour fabriquer un dispositif de stockage d'électricité selon la revendication 1, dans lequel
la feuille de matériau d'électrode positive (30) comprend une feuille de collecteur de courant positif (31) et une couche de matériau actif d'électrode positive (32, 33) placée sur une surface de la feuille de collecteur de courant positif (31), et
la feuille de matériau d'électrode négative (40) comprend une feuille de collecteur de courant négatif (41) et une couche de matériau actif d'électrode négative (42, 43) placée sur une surface de la feuille de collecteur de courant négatif (41), dans lequel
l'élément de stockage d'électricité comprend une pluralité des feuilles de matériau d'électrode positive (30), une pluralité des feuilles de matériau d'électrode négative (40), et une feuille de séparateur (13) interposée entre les feuilles de matériau d'électrode positive (30) et les feuilles de matériau d'électrode négative (40), et l'élément de stockage d'électricité (10) est formé par le pliage d'électrode positive, le pliage d'électrode négative, l'agencement initial, le positionnement, et l'empilage des feuilles de matériau d'électrode positive (30), des feuilles de matériau d'électrode négative (40), et de la feuille de séparateur (13), dans lequel
pour le positionnement, lesdites extrémités des deux deuxièmes feuilles de matériau contigües parmi les feuilles de matériau d'électrodes positive et négative pliées (30, 40) sont insérées d'une ouverture de l'une des premières feuilles de matériau parmi les feuilles de matériau d'électrodes positive et négative pliées (30, 40) vers un fond d'un creux de ladite première feuille de matériau.

8. Procédé pour fabriquer un dispositif de stockage d'électricité (1) selon la revendication 7, dans lequel
pour le pliage d'électrode positive, chacune de la pluralité de feuilles de matériau d'électrode positive (30) est pliée au milieu,
pour le pliage d'électrode négative, chacune de la pluralité de feuilles de matériau d'électrode négative (40) est pliée au milieu,
pour l'agencement initial, le déplacement relatif de la pluralité de feuilles de matériau d'électrode positive (30) les unes par rapport aux autres est limité, ou de la pluralité de feuilles de matériau d'électrode négative (40) les unes par rapport aux autres est limité, et
pour le positionnement, la pluralité de feuilles de matériau d'électrode positive (30) et la pluralité de feuilles de matériau d'électrode négative (40) sont positionnées en déplaçant de manière relative la pluralité de feuilles de matériau d'électrode positive pliées (30) et la pluralité de feuilles de matériau d'électrode négative pliées (40) plus près les unes des autres, et lesdites extrémités des deuxièmes feuilles de matériau sont limitées par les fonds des creux des premières feuilles de matériau.

9. Procédé pour fabriquer un dispositif de stockage d'électricité (1) selon la revendication 7 ou 8, dans lequel
le séparateur est réalisé en la forme d'une bande unique, et
pour l'agencement initial, la feuille de séparateur (13) est interposée entre la pluralité de feuilles de matériau d'électrode positive (30) et la pluralité de feuilles de matériau d'électrode négative (40).

10. Procédé pour fabriquer un dispositif de stockage d'électricité (1) selon la revendication 9, dans lequel
la feuille de séparateur (13) est réalisée en la forme d'une bande sans ligne de pliage, et
la feuille de séparateur (13) est pliée lorsque les feuilles de matériau d'électrode positive pliées (30) et les feuilles de matériau d'électrode négative pliées (40) sont déplacées de manière relative plus près les unes des autres pour le positionnement.

11. Procédé pour fabriquer un dispositif de stockage d'électricité (1) selon la revendication 9, dans lequel
la feuille de séparateur (13) est réalisée en la forme d'une bande avec des lignes de pliage, et les lignes de pliage sont formées de manière à correspondre aux positions où les extrémités et les fonds des creux doivent être situés en conséquence du positionnement des feuilles de matériau d'électrode positive pliées (30) et des feuilles de matériau d'électrode négative pliées (40) pour le positionnement, et
la feuille de séparateur (13) est interposée entre les feuilles de matériau d'électrode positive (30) et les feuilles de matériau d'électrode négative (40) en déplaçant les feuilles de matériau d'électrode positive pliées (30) et les feuilles de matériau d'électrode négative pliées (40) de manière relative plus près les unes des autres pour le positionnement.
